Europäisches Patentamt

(19) European Patent Office

Office européen des brevets

(11) Publication number: **0 271 584**
**A1**

(12) # EUROPEAN PATENT APPLICATION
published in accordance with Art. 158(3) EPC

(21) Application number: 87903423.9

(22) Date of filing: 26.05.87

Data of the international application taken as a basis:

(86) International application number:
PCT/JP87/00331

(87) International publication number:
WO87/07317 (03.12.87 87/27)

(51) Int. Cl.³: **E 02 F 7/10**
**E 21 D 9/12**

(30) Priority: 26.05.86 JP 119105/86

(43) Date of publication of application:
22.06.88 Bulletin 88/25

(84) Designated Contracting States:
AT BE CH DE FR GB IT LI NL SE

(71) Applicant: HITACHI CONSTRUCTION MACHINERY CO.,
LTD.
6-2, Ohtemachi 2-chome
Chiyoda-ku Tokyo 100(JP)

(72) Inventor: TSUCHIYA, Kiyoshi Tsuchiurakojo of Hitachi
Constr.
Machinary Co., Ltd. 650, Kandatsumachi
Tsuchiura-shi, Ibaraki 300-11(JP)

(72) Inventor: TAKANO, Fumiya Tsuchiurakojo of Hitachi
Constr.
Machinary Co., Ltd. 650, Kandatsumachi
Tsuchiura-shi, Ibaraki 300-11(JP)

(72) Inventor: SUDA, Masao Tsuchiurakojo of Hitachi Constr.
Machinary Co. Ltd. 650, Kandatsumachi
Tsuchiura-shi, Ibaraki 300-11(JP)

(72) Inventor: TAMURA, Katsumi Tsuchiurakojo of Hitachi
Constr.
Machinary Co., Ltd. 650, Kandatsumachi
Tsuchiura-shi, Ibaraki 300-11(JP)

(74) Representative: Patentanwälte Beetz sen. - Beetz jun.
Timpe - Siegfried - Schmitt-Fumian
Steinsdorfstrasse 10
D-8000 München 22(DE)

(54) **APPARATUS FOR SENDING EARTH AND SAND UNDER PRESSURE.**

(57) An apparatus for sending earth and sand under pressure, consisting of an outer cylinder (16), an inner cylinder (19) adapted to be moved by a first piston (21), which is slidably provided in the outer cylinder (16), in such a manner that an open end portion (19a) thereof facing the interior of an earth and sand tank (10) is displaced toward and away from an inlet (11a) of a force feed pipe (11), and a piston rod (20) for driving a third piston (23) provided slidably in the inner cylinder (19) and used to force-feed the earth and sand. The first piston (21) provided in the outer cylinder (16) is made annular, and an end portion (20b) of the piston rod (20) is extended through an end portion (19b) of the inner cylinder (19) and first annular piston (21). A second piston (22) provided at the same end portion (20b) is provided slidably in the outer cylin- der (16). Thus, a first liquid pressure chamber (24) for moving the first piston in the extending direction of the inner cylinder is formed between the first and second pistons, a second pressure liquid chamber (25) for moving the second piston in the extending direction of the piston rod between the second piston and an end plate (16b) of the outer cylinder, and a third liquid pressure chamber (26) for moving the first and second pistons in the contracting direction of the inner cylinder and piston rod on the side of an inner end plate (16a) of the first piston.

./...

FIG. 5

## Specification

## EARTH AND SAND TRANSFERRING APPARATUS

### Technical Field

The present invention relates to earth and sand transferring apparatuses and, more particularly, to an earth and sand transferring apparatus for transferring earth and sand, which are dug by a tunnel excavator and which are accumulated in an earth and sand tank, from the tank into a delivery pipe connected thereto.

### Background Art

A conventional earth and sand transferring apparatus of the kind referred to above is known from Japanese Patent Application No. 58-223358. As shown in Fig. 1 of the accompanying drawings, the earth and sand transferring apparatus comprises an outer cylinder 3 fixedly secured in confronting relation to an inlet 2a of a transfer pipe 2 which is connected to an earth and sand tank 1, an inner cylinder 4 having one end 4a which is received in the outer cylinder 3 and the other end 4b opening to the interior of the tank 1, the inner cylinder 4 being slidably supported in such a manner that the other end 4b moves toward and away from the inlet 2a of the transfer pipe 2, a piston rod 5 slidably arranged within the inner cylinder 4, a first piston 6 provided at the one end 4a of the inner cylinder 4 and slidably arranged within the outer cylinder 3 for moving the inner cylinder 4, a second piston 7 provided at one end of the piston rod 5 and slidably arranged within a first cylinder chamber 4c of the inner cylinder 4 for moving the piston rod 5 and a third piston 8 provided at the other axial end of the piston rod 5 and slidably arranged within a second cylinder chamber 4d of the inner cylinder 4 for pumping earth and sand and the apparatus is adapted to transfer the earth and sand in the tank 1 into the transfer pipe 2 with the third piston 8 by applying hydraulic fluid to the first and second pistons 6 and 7 to move the inner cylinder 4 and the piston rod 5.

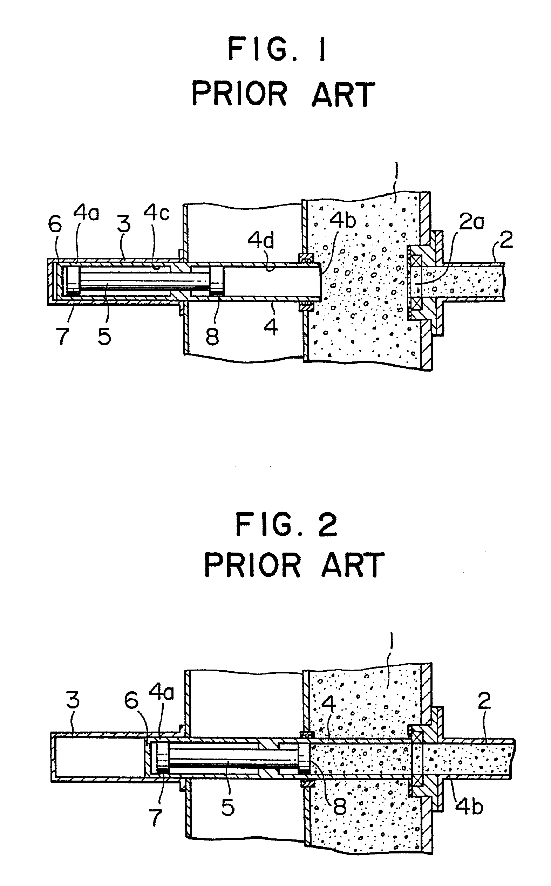

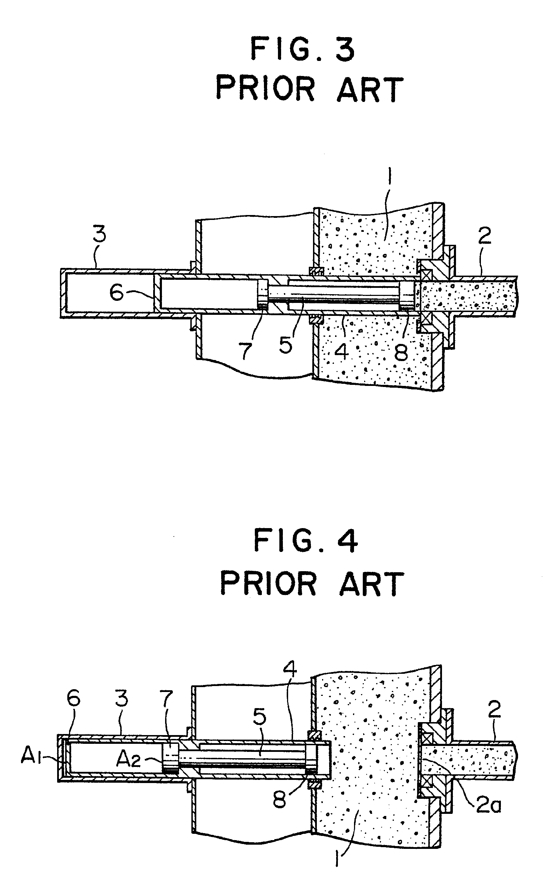

The earth and sand transferring operation by the third piston 8 will be described in further detail with reference to Figs. 1 through 4. The inner cylinder 4 and the piston rod 5 are first brought to their respective retracted positions as shown in Fig. 1. Then, as shown in Fig. 2, the inner cylinder 4 is extended to take the earth and sand in the tank 1 into the inner cylinder 4 through the open end 4b thereof. The open end 4b is abutted against the inlet 2a of the transfer pipe 2 to isolate the transfer pipe 2 and the tank 1 from each other. Subsequently, as shown in Fig. 3, the piston rod 5 is extended to cause the third piston 8 to push the earth and sand taken into the inner cylinder 4, into the transfer pipe 2, to thereby forcibly convey the earth and sand through the transfer pipe 2. After the forcible convey of the earth and sand, the inner cylinder 4 is retracted as shown in Fig. 4, and then the piston rod 5 is retracted, so that the various components are returned to their respective positions illustrated in Fig. 1. The four steps described above are repeated to successively feed the earth and sand in the tank 1 into the transfer pipe 2 to forcibly transfer the earth and sand therethrough.

In this manner, one cycle of the operation of the conventional apparatus consists of four steps including the Fig. 1 to Fig. 2 step, the Fig. 2 to Fig. 3 step, the Fig. 3 to Fig. 4 step and the Fig. 4 to Fig. 1 step. Within these four steps, the Fig. 4 to Fig. 1 step, i.e., the step of retraction of the piston rod 5 after retraction of the inner cylinder 4 is a step of drawing the earth and sand into the inner cylinder 4. On the other hand, the Fig. 1 to Fig. 2 step, i.e., the step of extension of the inner cylinder 4 is also a step of taking the earth and sand into the inner cylinder 4 while the inner cylinder 4 pushes its way through the earth and sand which have been fallen into the trace portion of the inner cylinder 4 to fill the trace portion. Thus, it is unnecessary to take the earth and sand into the inner cylinder 4 at the former step. The former step is useless in relation to the taking of the earth and sand. In other word, the time of the one cycle is lengthened by this step. Further, in the Fig. 4 to Fig. 1 step, there is a case in which air is occasionally drawn together with the earth and sand when the earth and sand is drawn into the inner cylinder 4 due to the retraction of the piston rod 5. In the case, after completion of the Fig. 2 to Fig. 3 transferring step, at an initial stage of the Fig. 3 to Fig. 4 step, the moment the inner cylinder 4 is retracted and the transfer pipe 2 and the earth and sand tank 1 are communicated with each other, air which has been compressed in the transferring step is expanded to thereby cause the earth and sand in the transfer pipe 2 flow back into the tank 1, so that a case uncapable of transferring is resulted.

Moreover, in comparison with the thrust of the inner cylinder 4 at the Fig. 1 to Fig. 2 step and the thrust of the piston rod 5 at the Fig. 2 to Fig. 3 step, greater thrust is required for the piston rod 5 which moves the third piston 8 to transfer the earth and sand. In the conventional apparatus, however, the second piston 7 for moving the piston rod 5 is accommodated in the inner cylinder 4. Accordingly, in comparison with the pressure receiving area $A_1$ of the first piston 6 for moving the inner cylinder 4 and the pressure receiving area $A_2$ of the second piston 7 for moving the piston rod 5, the latter pressure receiving

area $A_2$ must inevitably be smaller than the former pressure receiving area $A_1$, so that it is difficult to obtain great earth and sand transferring force. For this reason, in order to forcibly convey the earth and sand through a long distance, a high pressure hydraulic pump will be required to supply hydraulic fluid to these pistons. This causes the necessity of suiting hydraulic equipments such as hoses, couplings and the like and the earth and sand transferring apparatus per se, to the high pressure hydraulic pump, making the entire arrangement cumbersome and raising the cost thereof. Accordingly, it is an object of the invention to provide an earth and sand transferring apparatus which can shorten the time required for one cycle, which can avoid the drawing of air into an inner cylinder to prevent the earth and sand from flowing back from a transfer pipe, which can increase the thrust of a piston rod from the structural point of view, and which can employ a low pressure hydraulic pump as well as construction and hydraulic equipments sufficient to meet low pressure requirements.

### Disclosure of Invention

In an earth and sand transferring apparatus according to the invention, a first piston mounted on an inner cylinder is formed into an annulus, one end of a piston rod extends through one end of the inner cylinder and the annular first piston, a second piston mounted on the one end of the piston rod is slidably arranged within an outer cylinder, a first hydraulic chamber is defined between the first and second pistons and serves to move the first piston to extend the inner cylinder, a second hydraulic chamber is defined between the second piston and an end plate of the outer cylinder and serves to move the second piston to extend the piston rod, and a third hydraulic chamber is defined on the side of the first piston opposite to the end plate of the outer cylinder and serves to move the first and second pistons to retract the inner cylinder and the piston rod.

Brief Description of Drawings

Fig. 1 is a cross-sectional view of the conventional earth and sand transferring apparatus;

Figs. 2 through 4 are views similar to Fig. 1, but respectively showing steps which form, together with a step illustrated in Fig. 1, one cycle of the operation of the conventional earth and sand transferring apparatus;

Fig. 5 is a cross-sectional view showing an earth and sand transferring apparatus according to an embodiment of the invention;

Figs. 6 through 8 are schematic cross-sectional views respectively showing steps which form one cycle of the operation of the earth and sand transferring apparatus illustrated in Fig. 5;

Fig. 9 is a cross-sectional view of an earth and sand transferring apparatus according to another embodiment of the invention, and a block diagram of a hydraulic circuit;

Figs. 10 and 11 are fragmental enlarged cross-sectional views each showing an abutting portion between a forward end of an inner cylinder and an inlet of a transfer pipe, for explanation of returning force on the inner cylinder which can be eliminated by the earth and sand transferring apparatus illustrated in Fig. 9; and

Fig. 12 is a block diagram of a hydraulic circuit which can be substituted for the hydraulic circuit illustrated in Fig. 9, the hydraulic circuit of Fig. 12 employing a restrictor as a pressure retaining circuit.

Best Mode for Carrying Out the Invention

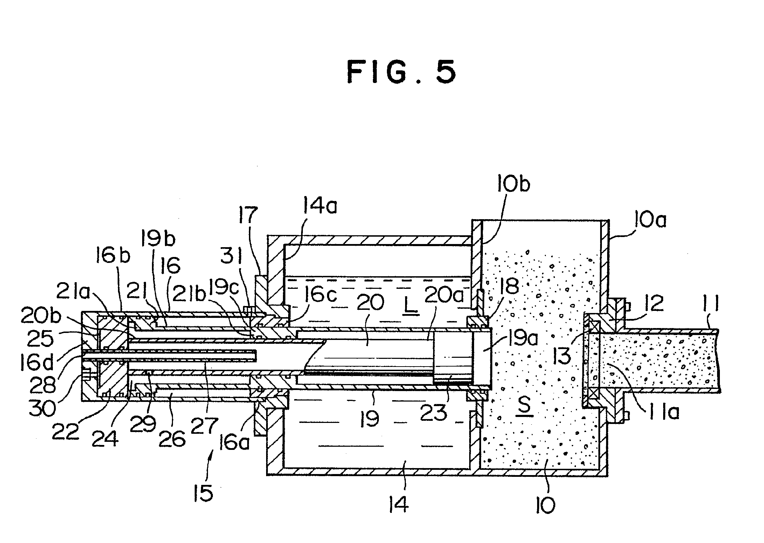

Embodiments of the invention will be described hereinafter with reference to Figs. 5 through 11.

Referring first to Fig. 5, an earth and sand tank 10 is arranged at an outlet end of transport means such as a belt conveyer or the like for transporting the earth and sand dug by a tunnel excavator, for example, such that the earth and sand are accumulated in the tank 10. The tank 10 has opposite side walls 10a and 10b. A transfer pipe 11, through which the earth and sand S within the tank 10 is forcibly transferred, is connected to one side wall 10a through an attaching member 12 which defines an inlet 11a for the transfer pipe 11. A seal member 13 formed of a resilient or elastic material is fitted in the attaching member 12. A lubricant oil tank 14 having a side wall 14a is mounted to the other side wall 10b of the tank 10, and is sealingly filled with lubricant oil.

An earth and sand transferring apparatus according to the first embodiment of the invention is generally designated by the reference numeral 15 and comprises an outer cylinder 16 which is fixedly mounted in confronting relation to the inlet 11a of the transfer pipe 11. The outer cylinder 16 is attached to the side wall 14a of the oil tank 14 through an attaching member 17 at one of the opposite axial ends 16a and 16b of the outer cylinder 16 near to the inlet 11a of the delivery pipe 11. An annular sealing guide 16c serving also as a stopper is fitted in the end 16a. An end plate 16d is secured to the end 16b remote from the inlet 11a of the transfer pipe 11, to close the end 16b. Arranged within the outer cylinder 16 is an inner cylinder 19 which extends through the oil tank 14 and which is slidably supported by the sealing guide 16c and an annular sealing guide 18 mounted in the side wall 10b of the earth and sand tank 10. Both ends 19a and 19b of the inner cylinder 19 are opened. One end 19a is located within the earth and sand tank 10, while the other end 19b is received in the outer cylinder 16. An annular sealing guide 19c serving also as a stopper is arranged at an axial center of the inner peripheral surface of the inner cylinder 19. Arranged within the inner cylinder 19 is a piston rod 20 which is slidably supported by the annular sealing guide 19c.

Provided on the inner cylinder 19 is an annular first piston 21 which is slidably received within the outer cylinder 16 for moving the inner cylinder 19. The first piston 21 is composed of a first piston element 21a secured to the end 19b of the inner cylinder 19 and a second piston element 21b formed on the end face of the sealing guide 19c. The first piston element 21a may be provided on any portion of the inner cylinder 19 other than the end 19b thereof. In the illustrated embodiment, the first piston 21 has been described as being composed of the first and second piston elements 21a and 21b having their respective pressure receiving faces different in position from each other. However, the first piston 21 may be constituted only by the first piston element 21a, or the pressure receiving faces of the respective first and second piston elements 21a and 21b may be located at the same position. Further, the second piston element 21b may be provided at any position between the end 19b of the inner cylinder 19 and the sealing guide 19c other than the end face of the sealing guide 19c.

A second piston 22 for moving the piston rod 20 is secured at one of opposite axial ends 20a and 20b of the piston rod 20 remote from the inlet 11a of the transfer pipe 11. A third piston 23 for transferring the earth and sand is secured to the end 20a near to the inlet 11a of the transfer pipe 11 and is slidable within the inner cylinder 19. The end 20b of the piston rod 20 extends through the end 19b of the inner cylinder 19 and the annular first piston 21. The second piston 22 secured to the end 20b is arranged within the outer cylinder 16 on the side axially outwardly of the first piston 21, i.e., on the side closer to the end plate 16d of the outer cylinder 16 than the first piston 21.

Defined between the first and second pistons 21 and 22 is a first hydraulic chamber 24 which serves to move the first piston 21 to the extending direction of the inner cylinder 19. Defined between the second piston 22 and the end plate 16d of the outer cylinder 16 is a second hydraulic chamber 25 which serves to move the second piston 22 to the extending direction of the piston rod 20. Defined between the sealing guide 16c and the rear face of the first piston 21 on the side opposite to the end plate 16d is a third hydraulic chamber 26 which serves to move the first and second

- 11 -

pistons 21 and 22 to the retracting direction of the inner cylinder 19 and the piston rod 20.

In the illustrated embodiment, the piston rod 20 is of a hollow structure. A tube member 27 fixedly secured to the end plate 16d of the outer cylinder 16 extends through the second piston 22 into the hollow portion of the piston rod 20. A port 28 is provided at the base end of the tube member 27. A bore 29 is formed at the piston rod 20 to communicate the hollow portion thereof with the first hydraulic chamber 24. Thus, the hydraulic fluid is supplied to and discharged from the first hydraulic chamber 24 through the port 28, the tube member 27 and the bore 29.

Ports 30 and 31 are formed respectively at the end plate 16d of the outer cylinder 16 and at the outer cylinder 16 adjacent the attaching member 17. The ports 30 and 31 communicate respectively with the second and third hydraulic chambers 25 and 26. The hydraulic fluid is supplied to and discharged from the second and third hydraulic chambers 25 and 26 through the respective ports 30 and 31.

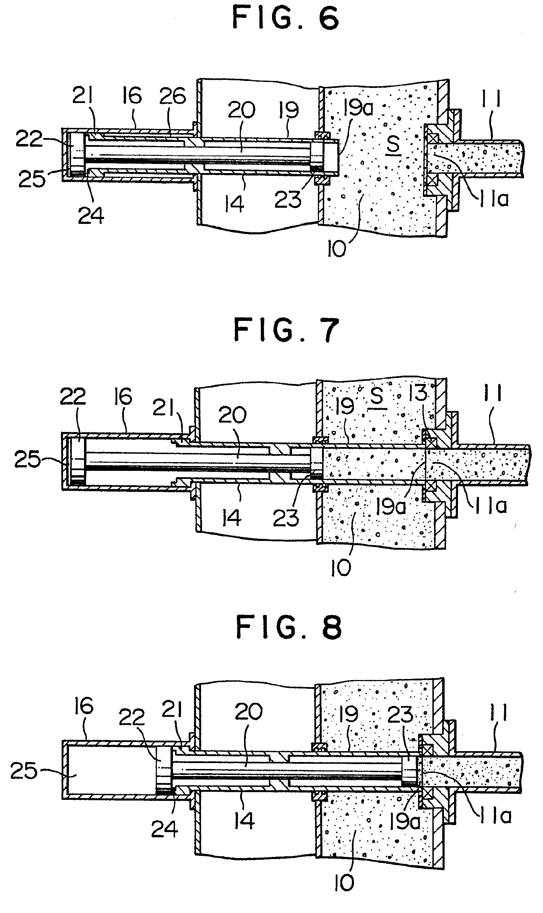

The operation of the earth and sand transferring apparatus illustrated in Fig. 5 will be described with reference to Figs. 6 through 8.

When transferring the earth and sand, the inner cylinder 19 and the piston rod 20 are brought to their respective retracted positions, as shown in Fig.

6. Subsequently, the hydraulic fluid is supplied to the first hydraulic chamber 24 through the port 28, to extend the inner cylinder 19 as shown in Fig. 7. Earth and sand S in the vicinity of the inlet 11a of the transfer pipe 11 are taken into the inner cylinder 19 through the forward open end 19a thereof. The open end 19a of the inner cylinder 19 is abutted against the seal member 13 at the inlet 11a of the transfer pipe 11, to isolate the transfer pipe 11 and the earth and sand tank 10 from each other. Subsequently, the hydraulic fluid is supplied to the second hydraulic chamber 25 through the port 30 to extend the piston rod 20 as shown in Fig. 8, to thereby cause the third piston 23 to push the earth and sand taken into the inner cylinder 19, into the transfer pipe 11 to forcibly convey the earth and sand through the transfer pipe 11. As the hydraulic fluid is supplied to the third hydraulic chamber 26 through the port 31 to retract the inner cylinder 19 after the transferring of the earth and sand by the third piston 23, the first piston 21 is brought into engagement with the second piston 22 to move the piston rod 20, to thereby allow the inner cylinder 19 and the piston rod 20 to be retracted together. Thus, the various components are returned to their respective positions illustrated in Fig. 6. These steps are repeated as one cycle, to successively push the earth and sand within the earth and sand tank 10 into the transfer pipe 11, thereby forcibly convey the earth and sand through the transfer pipe 11.

It will be understood from the above description that the illustrated embodiment can omit the step of retraction of the piston rod after retraction of the inner cylinder in the conventional apparatus described previously, and that one cycle of the illustrated embodiment is formed by three steps including the Fig. 6 to Fig. 7 step, the Fig. 7 to Fig. 8 step and the Fig. 8 to Fig. 6 step. That is to say, it is possible for the illustrated embodiment to shorten the time required for one cycle to 3/4 of that in the conventional apparatus, so that the same amount of earth and sand can be transferred 3/4 of the time required for the conventional apparatus. Accordingly, assuming that the earth and sand is transferred for the same period of time, it is possible for the illustrated apparatus to transfer more amount of earth and sand than the conventional apparatus if the illustrated apparatus is the same in dimension as the conventional apparatus. Thus, the performance of the illustrated apparatus is enhanced, and the same amount of earth and sand can be transferred by the illustrated apparatus smaller in dimension that the conventional apparatus, so that the illustrated apparatus can be reduced in size.

Further, since there is no step of retraction of the piston rod 20 after retraction of the inner cylinder 19, no air is drawn into the inner cylinder 19. Thus, a fear can be eliminated that the earth and sand flow back from the transfer pipe 11.

Moreover, the pressure receiving area of the second piston 22 for moving the piston rod 20 can be brought to the same dimension as the effective cross-sectional area of the outer cylinder 16 which is larger than the inner cylinder 19. This makes it possible to increase the moving force by the piston rod 20, so that great earth and sand transferring force can be attained. As a result, a low pressure pump can be employed as a hydraulic pump for supplying hydraulic fluid to the hydraulic chambers 24, 25 and 26, and the hydraulic equipments such as hoses and couplings and the earth and sand pumping apparatus per se can be made the low pressure requirements.

The illustrated embodiment has been described as having the arrangement of supplying the hydraulic fluid to the first hydraulic chamber 24, in which the piston rod 20 is formed into a hollow structure, the tube member 27 extends into the piston rod 20, and the bore 29 is formed on the piston rod 20. However, the tube member 27 may be mounted so as to extend directly into the first hydraulic chamber 24. In this case, the piston rod 20 may be of a solid structure.

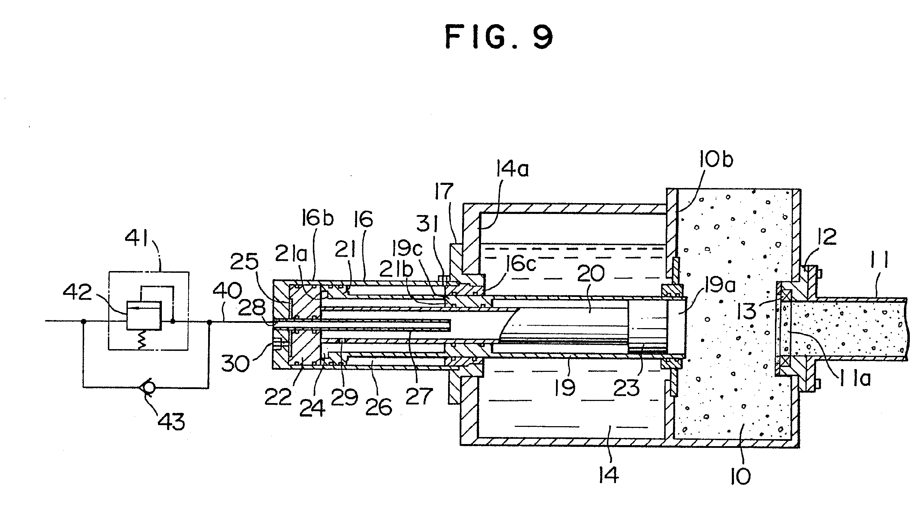

Another embodiment of the invention will be described with reference to Figs. 9 through 11 in which like or similar reference numerals are used to designate like or similar parts and components to those of the first embodiment sown in Figs. 5 through 8. As will be understood from the reference numerals, an earth and sand transferring apparatus body illustrated in Figs. 9 through 11 is the same as that of the first embodiment.

As shown in Fig. 9, a hydraulic circuit 40 is provided which is connected to the port 28 for supplying hydraulic fluid to the first hydraulic chamber 24 or for discharging the hydraulic fluid therefrom. Connected to the hydraulic circuit 40 is a pressure retaining circuit 41 for generating pressure counteracting the returning force which acts on the inner cylinder 19 and which occurs during transferring of earth and sand.

In the illustrated embodiment, the pressure retaining circuit 41 is structured by a relief valve 42. Connected also to the hydraulic circuit 40 in parallel with the relief valve 42 is a check valve 43 which permits the hydraulic fluid to flow only toward the port 28.

The operation of the embodiment illustrated in Fig. 9 will be described.

In the earth and sand transferring apparatus, the transferring of earth and sand is performed with one cycle formed by three steps including a Fig. 6 to Fig. 7 step, a Fig. 7 to Fig. 8 step and a Fig. 8 to Fig. 6 step, like the first embodiment described previously.

At the Fig. 7 to Fig. 8 step, the earth and sand pressure within the inner cylinder 19 and the transfer pipe 11 is increased. By this increased pressure, the returning force is applied to the inner cylinder 19 to tend to return the same to its retracted position (in the left hand direction as viewed in Fig. 9).

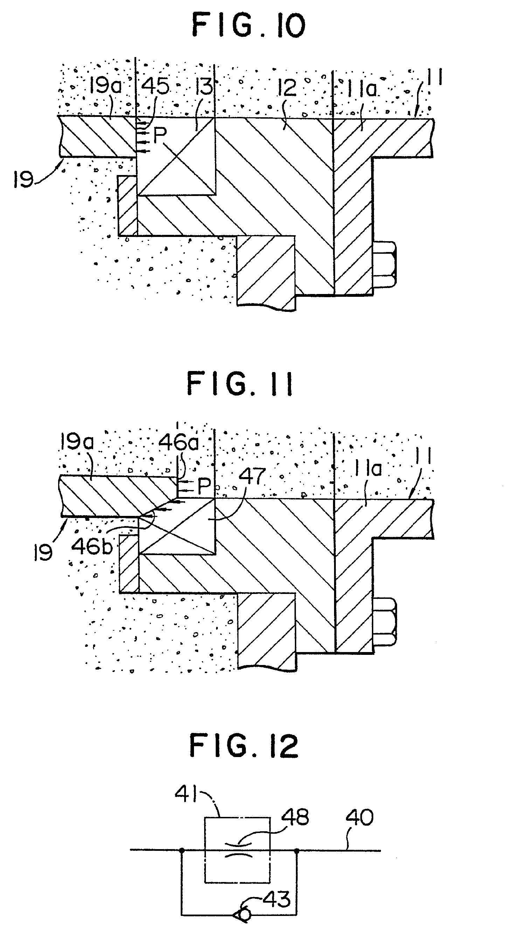

The above returning force will be described in further detail with reference to Fig 10. The Fig. 7 to Fig. 8 step is a step from the state in which the inner cylinder 19 is extended to isolate the transfer pipe 11 and the earth and sand tank 10 from each other, to the state in which the earth and sand within the inner cylinder 19 is pushed into the transfer pipe 11 by the third piston 23. During the step, the internal pressure within the inner cylinder 19 and the transfer pipe 11 increases by an amount corresponding to the transfer load. At this time, on the other hand, the open end 19a of the inner cylinder 19 is abutted against the seal member 13 at the inlet 11a of the transfer pipe 11, but a slight gap is presented between and end face 45 of the open end 19a and the seal member 13 at the inlet 11a of the transfer pipe 11. Because of the slight gap, the pressure generated within the inner cylinder 19 and the transfer pipe 11 acts also on the end face 45 of the open end 19a, thereby tending to return the inner cylinder 19 toward its retracted position (in the left hand direction as viewed in Fig. 9). In the case where, as shown in Fig. 11, the end face of the inner cylinder 19 is composed of a radially inward end face 46a at right angles to the axis of the inner cylinder 19 and a radially outward tapered end face 46b, and the tapered end face 46b is abutted against a seal member 47, the returning force is further increased because the radially inward end face 46a is exposed to the earth and sand within the inner cylinder 19 and the transfer pipe 11, so that the earth and sand pressure is directly applied to the end face 46a

When such returning force is applied to the inner cylinder 19 and if the returning force is higher than the urging force due to the hydraulic fluid within the first hydraulic chamber 24, the inner cylinder 19 would be overcome by the returning force and be retracted. If this occurs, the end face 45 or 46b of the open end 19a is moved away from the seal member 13 or 47, and an unallowable gap is formed between the end face 45 or 46b and the seal member 13 or 47. Thus, the earth and sand leaks through the gap, resulting in a decrease in the transferring efficiency. Further, the earth and sand flowing out through the gap causes wear to occur on the end face 45 or 46b and on the seal member 13 or 47 to enlarge the gap. Finally, the balance between the pressure within the inner cylinder 19 and the transferring load is lost, so that the entire earth and sand within the inner cylinder 19 flow out through the gap, making it impossible to transfer the earth and sand.

In the embodiment illustrated in Fig. 9, the relief valve 42 connected to the hydraulic circuit 40 is set to such a pressure as to prevent the hydraulic fluid within the first hydraulic chamber 24 from flowing out downstream of the hydraulic circuit 40 due to the above-mentioned returning force acting on the inner cylinder 19. By virtue of the relief valve 42, when the returning force is applied to the inner cylinder 19, the relief valve 42 prevents the hydraulic fluid from being discharged out of the first hydraulic chamber 24. Thus, pressure is generated which counteracts the returning force, to prevent the inner cylinder 19 from being returned. As a consequence, no unallowable gap is formed between the end face 45 or 46b of the open end 19a of the inner cylinder 19 and the seal member 13 or 47, thereby enabling the earth and sand transfer to be effected efficiently.

During the Fig. 6 to Fig. 7 step of extension of the inner cylinder 19, the hydraulic fluid is supplied to the first hydraulic chamber 24 through the check valve 43.

The pressure retaining circuit 41 may employ a restrictor 48 as shown in Fig. 12, in substitution for the relief valve 42.

As will be clear from the above description, one cycle in the invention is formed by three steps, thereby making it possible to shorten the time required for one cycle. This enables the earth and sand transferring apparatus to have its increased performance and to be reduced in size. Further, since the step of retraction of the piston rod after retraction of the inner cylinder can be omitted, it is possible to avoid drawing of air into the inner cylinder, making it possible to prevent the earth and sand from flowing back from the transfer pipe. Moreover, since the second piston for moving the piston rod is arranged within the outer cylinder having a larger diameter, it is possible from the structural point of view to increase the thrust on the piston rod. Thus, the low pressure pump as well as the construction and hydraulic equipments sufficient to meet the low pressure requirements can be employed, resulting in a reduction of the cost.

| 1 | sand tank |
|---|---|
| 2 | transfer pipe |
| 2a | inlet |
| 3 | outer cylinder |
| 4 | inner cylinder |
| 4a | one end |
| 4b | other end |
| 4c | first cylinder chamber |
| 4d | second cylinder chamber |
| 5 | piston rod |
| 6 | first piston |
| 7 | second piston |
| 8 | third piston |
| 10 | tank |
| 10a | side wall |
| 10b | side wall |
| 11 | transfer pipe |
| 11a | inlet |
| 12 | attaching member |
| 13 | seal member |
| 14 | lubricant oil tank |
| 14a | side wall |
| 15 | earth and sand transferring apparatus |
| 16 | outer cylinder |
| 16a | axial end |
| 16b | axial end |
| 16c | annular sealing guide |
| 16d | end plate |
| 17 | attaching member |

0271584

| | |
|---|---|
| 18 | annular sealing guide |
| 19 | inner cylinder |
| 19a | end |
| 19b | end |
| 19c | annular sealing guide |
| 20 | piston rod |
| 21 | annular first piston |
| 21a | first piston element |
| 21b | second piston element |
| 22 | second piston |
| 23 | third piston |
| 24 | first hydraulic chamber |
| 25 | second hydraulic chamber |
| 26 | third hydraulic chamber |
| 27 | tube member |
| 28 | port |
| 29 | bore |
| 30 | port |
| 31 | port |
| 40 | hydraulic circuit |
| 41 | pressure retaining circuit |
| 42 | relief valve |
| 43 | check valve |
| 45 | end face |
| 46a | radially inward end face |
| 46b | radially outward tapered end face |
| 47 | seal member |
| 48 | restrictor |

A1        pressure receiving area

A2        pressure receiving area

S         sand

CLAIMS

1.      An earth and sand transferring apparatus comprising an outer cylinder (16) fixedly mounted in confronting relation to an inlet (11a) of a transfer pipe (11) connected to an earth and sand tank (10), said outer cylinder (16) having an end plate (16d) at an end (16b) of said outer cylinder (16) remote from said inlet (11a) of said transfer pipe (11), an inner cylinder (19) having one end (19b) thereof received in said outer cylinder (16) and the other end (19a) opening to the interior of said tank (10), said inner cylinder (19) being slidably supported such that the other end (19a) moves toward and away from said inlet (11a) of said transfer pipe (11), a piston rod (20) slidably arranged within said inner cylinder (19), a first piston (21) mounted on said inner cylinder (19) and slidably arranged within said outer cylinder (16) for moving said inner cylinder (19), a second piston (22) mounted on one end (20b) of said piston rod (20) for moving the same, and a third piston (23) mounted on the other end (20a) of said piston rod (20) and slidably arranged within said inner cylinder (19) for transferring the earth and sand into said transfer pipe (11), wherein hydraulic fluid is applied to said first and second pistons (21, 22) to move said inner cylinder (19) and said piston rod (20) thereby causing said third piston (23) to transfer the earth and sand within said tank (10) into said transfer pipe (11), characterized in

that said first piston (21) mounted on said inner cylinder (19) is formed into an annulus;

that said one end (20b) of said piston rod (20) extends through said one end (19b) of said inner cylinder (19) and said annular first piston (21), and said second piston (22) mounted on said one end (20b) of said piston rod (20) is slidably arranged within said outer cylinder (16);

that a first hydraulic chamber (24) is defined between said first piston (21) and said second piston (22) and serves to move said first piston (21) to the extending direction of said inner cylinder (19);

that a second hydraulic chamber (25) is defined between said second piston (22) and said end plate (16d) of said outer cylinder (16) and serves to move said second piston (22) to the extending direction of said piston rod (20); and

that a third hydraulic chamber (26) is defined on the side of said first piston (21) opposite to said end plate (16d) of said outer cylinder (16) and serves to move said first and second pistons to the retracting direction of said inner cylinder (19) and said piston rod (20).

2.      An earth and sand transferring apparatus as defined in claim 1, characterized by including a tube member (27) attached to said end plate (16d) of said outer cylinder (16) and extending through said second piston (22), the hydraulic fluid being supplied to and discharged from said first hydraulic chamber (24) through said tube member (27).

3.     An earth and sand transferring apparatus as defined in claim 2, characterized in that said piston rod (20) is of a hollow structure, said tube member (27) extending into the hollow portion of said piston rod (20), said piston rod (20) being provided with a bore (29), said tube member (27) communicating with said first hydraulic chamber (24) through the hollow portion of said piston rod (20) and said bore (29).

4.     An earth and sand transferring apparatus as defined in claim 1, characterized by including a hydraulic circuit (40) connected to said first hydraulic chamber (24) for supplying the hydraulic fluid to said first hydraulic chamber (24) and for discharging the hydraulic fluid from said first hydraulic chamber (24), and a pressure retaining circuit (41) connected to said hydraulic circuit (40) for generating a pressure counteracting a returning force which acts on said outer cylinder (16) and which is generated at transferring of the earth and sand.

5.     An earth and sand transferring apparatus as defined in claim 3, characterized in that said pressure retaining circuit (41) is structured by a relief valve (42).

6.      An earth and sand transferring apparatus as defined in claim 3, characterized in that said pressure retaining circuit (41) is structured by a restrictor (48).

7.      An earth and sand transferring apparatus as defined in claim 3, including means (43) connected to said hydraulic circuit (40) in parallel with said pressure retaining circuit (41), for permitting the hydraulic fluid to flow only toward said first hydraulic chamber (24).

# FIG. I
# PRIOR ART

# FIG. 2
# PRIOR ART

# FIG. 3
# PRIOR ART

# FIG. 4
# PRIOR ART

# FIG. 5

# FIG. 6

# FIG. 7

# FIG. 8

# FIG. 9

## FIG. 10

## FIG. 11

## FIG. 12

# INTERNATIONAL SEARCH REPORT

0271584

International Application No PCT/JP87/00331

## I. CLASSIFICATION OF SUBJECT MATTER (if several classification symbols apply, indicate all) 3

According to International Patent Classification (IPC) or to both National Classification and IPC

Int.Cl$^4$    E02F7/10, E21D9/12

## II. FIELDS SEARCHED

| Minimum Documentation Searched 4 | |
|---|---|
| Classification System | Classification Symbols |
| IPC | .E02F7/10, E21D9/12 |

| Documentation Searched other than Minimum Documentation to the Extent that such Documents are Included in the Fields Searched 5 |
|---|
| Jitsuyo Shinan Koho          1926 - 1987<br>Kokai Jitsuyo Shinan Koho   1971 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, A, 59-51171 (Hitachi Construction Machinery Co., Ltd.) 14 November 1984 (14. 12. 84) Page 3, upper right column, line 7 to page 4, upper right column, line 20, Figs. 6, 8 to 10, JP, A, 59-52098 & EP, A1, 103886 | 1, 4-7 |
| X | JP, A, 60-23531 (Hitachi Construction Machinery Co., Ltd.) 6 February 1985 (06. 02. 85) Page 3, lower left column, line 13 to page 4, lower right column, line 1, Figs. 3, 6 to 8 (Family: none) | 1, 4-7 |
| X | JP, A, 60-23598 (Hitachi Construction Machinery Co., Ltd.) 6 February 1985 (06. 02. 85) Page 3, lower left column, line 6 to page 4, lower left column, line 11, Figs. 3, 5 to 7   (Family: none) | 1, 4-7 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| August 17, 1987 (17. 08. 87) | August 31, 1987 (31. 08. 87) |
| International Searching Authority 1<br>Japanese Patent Office | Signature of Authorized Officer 20 |

Form PCT/ISA/210 (second sheet) (October 1977)

0271584

International Application No. PCT/JP87/00331

| FURTHER INFORMATION CONTINUED FROM THE SECOND SHEET | | |
|---|---|---|
| X | JP, A, 60-119898 (Hitachi Construction Machinery Co., Ltd.) 27 June 1985 (27. 06. 85) Page 5, lower left column, line 16 to page 6, lower left column, line 7, Figs. 12, 14 to 16 (Family: none) | 1, 4-7 |
| X | JP, A, 60-219333 (Hitachi Construction Machinery Co., Ltd.) 2 November 1985 (02. 11. 85) Page 2, upper right column, line 4 to page 3, upper left column, line 18, Figs. 1, 5 to 7 (Family: none) | 1, 4-7 |

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers _____, because they relate to subject matter[12] not required to be searched by this Authority, namely:

2.☐ Claim numbers _____, because they relate to parts of the international application that do not comply with the prescribed requirements to such an extent that no meaningful international search can be carried out[13], specifically:

**VI.☐ OBSERVATIONS WHERE UNITY OF INVENTION IS LACKING[11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

**Remark on Protest**
☐ The additional search fees were accompanied by applicant's protest.
☐ No protest accompanied the payment of additional search fees.

Form PCT/ISA/210 (supplemental sheet (2)) (October 1981)

**FURTHER INFORMATION CONTINUED FROM THE SECOND SHEET**

| | | |
|---|---|---|
| Y | JP, A, 59-51171 (Hitachi Construction Machinery Co., Ltd.) 14 November 1984 (14. 11. 84) Page 3, upper right column, line 7 to page 4, upper right column, line 20, Figs. 6, 8 to 10, JP, A, 59-52098 & EP, A1, 103886 | 2-3 |
| Y | JP, A, 60-23531 (Hitachi Construction Machinery Co., Ltd.) Page 3, lower left column, line 13 to page 4, lower right column, line 1, Figs. 3, 6 to 8 (Family: none) | 2-3 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)

| | FURTHER INFORMATION CONTINUED FROM THE SECOND SHEET | |
|---|---|---|
| Y | JP, A, 60-219333 (Hitachi Construction Machinery Co., Ltd.) 2 November 1985 (02. 11. 85) Page 2, upper right column, line 4 to page 3, upper left column, line 18, Figs. 1, 5 to 7 (Family: none) | 2-3 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

**Remark on Protest**

☐ The additional search fees were accompanied by applicant's protest.

☐ No protest accompanied the payment of additional search fees.

Form PCT/ISA/210 (supplemental sheet (2)) (October 1981)

| FURTHER INFORMATION CONTINUED FROM THE SECOND SHEET | | |
|---|---|---|
| Y | JP, A, 60-23598 (Hitachi Construction Machinery Co., Ltd.) 6 February 1985 (06. 02. 85) Page 3, lower left column, line 6 to page 4, lower left column, line 11, Figs. 3, 5 to 7 (Family: none) | 2-3 |
| Y | JP, A, 60-119898 (Hitachi Construction Machinery Co., Ltd.) 27 June 1985 (27. 06. 85) Page 5, lower left column, line 16 to page 6, lower left column, line 7, Figs. 12, 14 to 16 (Family: none) | 2-3 |

**V.☐ OBSERVATIONS WHERE CERTAIN CLAIMS WERE FOUND UNSEARCHABLE** [10]

This International search report has not been established in respect of certain claims under Article 17(2) (a) for the following reasons:

1.☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING** [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)